# EUROPÄISCHE PATENTSCHRIFT

(11) **EP 2 954 967 B1**
(45) Veröffentlichungstag und Bekanntmachung des Hinweises auf die Patenterteilung: **07.08.2019**
(21) Anmeldenummer: 14171953.4
(22) Anmeldetag: 11.06.2014
(51) Int. Cl.: B23F 21/00, B23F 19/10

(54) **Verfahren und Vorrichtung zum stirnseitigen Anfasen einer Verzahnung eines Werkstücks**
Method and device for chamfering the front face of a toothing of a workpiece
Procédé et dispositif de chanfreinage frontal d'une denture d'une pièce à usiner

(43) Veröffentlichungstag der Anmeldung: 16.12.2015
(73) Patentinhaber: Klingelnberg AG, 8050 Zürich (CH)
(72) Erfinder: Vogel, Olaf, 76275 Ettlingen (DE)
(74) Vertreter: Heusch, Christian

(56) Entgegenhaltungen:
- DE-A1- 10 230 148
- DE-U1- 20 320 294
- DE-U1-202005 011 790
- KR-A- 20130 110 673
- "Abdachen und Verzahnen in einer Aufspannung Herstellung von Zahnrädern und verzahnten Bauteilen", WERKSTATT UND BETRIEB, CARL HANSER VERLAG GMBH & CO. KG, DE, Bd. 146, Nr. 11, 1. November 2013 (2013-11-01), Seiten 56-57, XP001587012, ISSN: 0043-2792

## Beschreibung

### Gebiet der Erfindung

Gegenstand der Erfindung ist ein Verfahren und eine Vorrichtung zum stirnseitigen Anfasen einer Verzahnung eines Werkstücks.

### Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren.

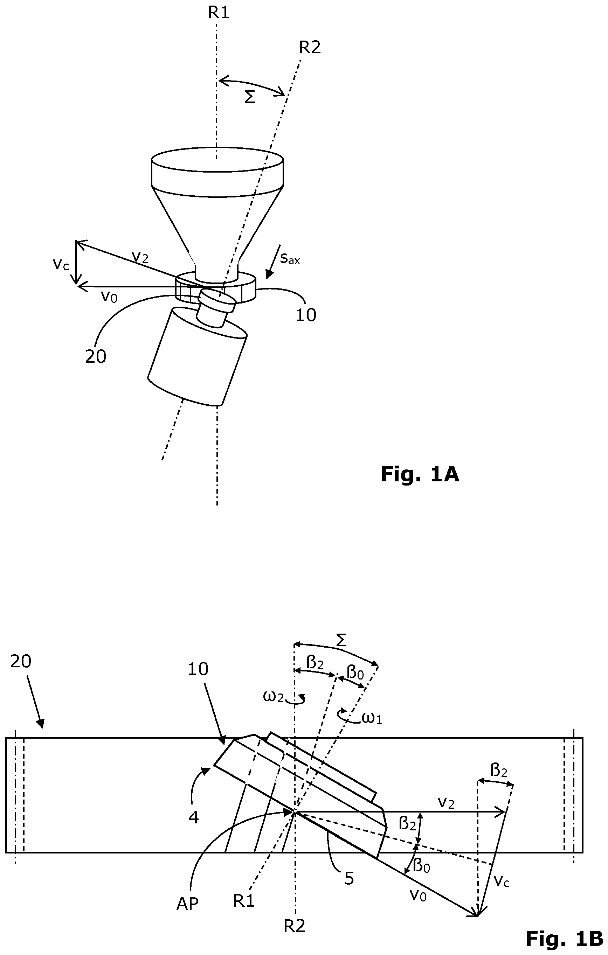

Vor einiger Zeit wurde das Wälzschäl-Verfahren erneut aufgegriffen. Die Grundlagen dieses Verfahrens sind circa 100 Jahre alt. Beim Wälzschälen wird, wie in Fig. 1A gezeigt, ein Achskreuzwinkel Σ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Umso größer der Achskreuzwinkel Σ betragsmäßig ist, umso mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub sₐₓ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel Σ der Rotationsachsen R1 und R2 beeinflusst. Die jeweiligen Drehbewegungen sind hier mit ω1 und ω2 bezeichnet. Der Achskreuzwinkel Σ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 1A zu entnehmen. Fig. 1A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 1A z.B. anhand der Winkelgeschwindigkeiten ω₁ und ω₂ zu erkennen ist.

Hinzu kommen weitere Relativbewegungen. Es ist der bereits erwähnte Axialvorschub sₐₓ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Rotationsachse R2 des Werkstücks 20. Die Richtung dieser Bewegung des Werkzeugs 10 ist in Fig. 1A mit sₐₓ gekennzeichnet. Falls am Werkstück 20 eine Schrägverzahnung erwünscht ist (d.h. ß_{2#}0), wird dem Axialvorschub sₐₓ ein Differentialvorschub s_{D} überlagert, welcher, wie in Fig. 1A gekennzeichnet, einer zusätzlichen Drehung des Werkstücks 20 um seine Rotationsachse R2 entspricht. Der Differentialvorschub s_{D} und der Axialvorschub sₐₓ werden am Auslegungspunkt derart aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub s_{rad} eingesetzt werden, um etwa die Balligkeit der Verzahnung des Werkstücks 20 zu beeinflussen.

Beim Wälzschälen ergibt sich der Vektor der Schnittgeschwindigkeit ν̅_̅{̅c̅}̅ im Wesentlichen als Differenz der beiden um den Achskreuzwinkel Σ zueinander geneigten Geschwindigkeitsvektoren ν̅₁, und _{ν̅2} der Rotationsachsen R1, R2 von Werkzeug 10 und Werkstück 20. ν̅₁, ist der Geschwindigkeitsvektor am Umfang des Werkzeugs 10 und _{ν̅2} ist der Geschwindigkeitsvektor am Umfang des Werkstücks 20. Die Schnittgeschwindigkeit ν̅_{c} des Wälzschälprozesses kann durch den Achskreuzwinkel Σ und die Drehzahl im Schraubradersatzgetriebe verändert werden. Der wie bereits erwähnt relativ langsame Axialvorschub sₐₓ hat beim Wälzschälverfahren nur einen kleinen Einfluss auf die Schnittgeschwindigkeit v*_{c'}* der vernachlässigt werden kann. Deshalb ist der Axialvorschub sₐₓ in dem Vektordiagram mit den Vektoren ν̅₁, ν̅₂ und ν̅*_{c}* in Fig. 1A nicht berücksichtigt.

In Fig. 1B ist das Wälzschälen einer Außenverzahnung eines Werkstücks 20 mit einem konischen Wälzschälwerkzeug 10 gezeigt. In Fig. 1B sind wiederum der Achskreuzwinkel Σ, der Vektor der Schnittgeschwindigkeit ν̅*_{c}*, die Geschwindigkeitsvektoren ν̅₁, am Umfang des Werkzeugs 10 und ν̅₂ am Umfang des Werkstücks 20, sowie der Schrägungswinkels ß₁ des Werkzeugs 10 und der Schrägungswinkel ß₂ des Werkstücks 20 gezeigt. Der Schrägungswinkel ß₂ hier ungleich Null. Der Zahnkopf des Werkzeugs 10 ist in Fig. 1B mit dem Bezugszeichen 4 gekennzeichnet. Die Zahnbrust ist in Fig. 1B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt BP zusammen. In diesem Auslegungspunkt AP berühren sich die Wälzkreise des Schraubwälzersatzgetriebes.

Bei der spanenden Herstellung von Zahnrädern am Werkstück ergeben sich jeweils stirnseitige Kanten im Übergangsbereich der Zahnflanken zur Stirnfläche, die teilweise sehr scharf und deutlich ausgeprägt sein können. Typischerweise werden diese Kanten in einem separaten Verfahrensschritt angefast. Es gibt sehr unterschiedliche Ansätze, um beim Fertigen von Verzahnungen das Anfasen solcher Kanten zu bewerkstelligen.

Teilweise entstehen auch prozessbedingte Grate im Kantenbereich, die man in einem Bearbeitungsschritt durch ein sogenanntes Entgraten entfernt.

Das Anfasen und Entgraten sind gleichartige Prozesse, da häufig die Bewegungsabläufe identisch oder nahezu identisch sind. Auch die Werkzeuge müssen sich nicht zwingend voneinander unterscheiden. Daher ist im Folgenden stets vom Anfasen die Rede, wobei hierin unter dieser Bezeichnung auch das Entgraten subsumiert ist.

Teilweise kommen spezielle Werkzeuge zum Anfasen zum Einsatz, die entweder in einem separaten Verfahrensschritt in einer Maschine eingespannt werden müssen, bevor ein solches Werkzeug zum Einsatz kommt. Oder es wird in der Maschine eine separate Achse mit einem speziellen Werkzeug zum Anfasen vorgesehen. Um sowohl die rechten als auch die linken Flanken im Kantenbereich anfasen zu können, sind teilweise recht komplexe Bewegungsabläufe (Relativbewegungen zwischen Werkzeug und Werkstück) erforderlich. Beim Wälzschälen kommt außerdem hinzu, dass meist eine Drehrichtungsumkehr vorgenommen werden muss, nachdem man mit einem Werkzeug z.B. die linken Flanken angefast hat. Erst nach der Drehrichtungsumkehr kann dann das Anfasen der rechten Flanken erfolgen. Eine solche Drehrichtungsumkehr ist zeitaufwendig und führt zu längeren Prozesszeiten. Besonders in einer Serienproduktion ist es jedoch von Vorteil die Prozesszeiten zu verkürzen.

Aus dem Dokument DE20320294 U1 ist eine eine Vorrichtung zum Entgraten der Stirnkanten einer Verzahnung im kontinuierlichen Verfahren bekannt. Dazu wird ein Entgratwerkzeug kontinuierlich mit dem zu entgratenden Zahnrad in Eingriff gebracht. Das Entgratwerkzeug weist am Umfang im gleichen Umfangsabstand Schneidzähne und Spannuten auf. Die Schneidzähne haben in Umfangsrichtung einen schraubenlinienförmigen Verlauf. Die an der in Drehrichtung vorderen Seite der Zähne ausgebildeten Schneidkanten liegen auf einem gemeinsamen Flugkreis.

Aufgabe der vorliegenden Erfindung ist es daher, ein Verfahren und eine Vorrichtung zum Anfasen von Werkstücken vorzusehen, das/die kürzere Prozesszeiten ermöglicht.

Diese Aufgabe wird gemäß der vorliegenden Erfindung durch ein wälzschälartiges Verfahren gelöst, das es ermöglicht rechte und linke Flanken ohne Drehrichtungsumkehr anzufasen. Ausserdem wird eine entsprechend optimierte Vorrichtung als Spezialwerkzeug bereitgestellt.

Gemäss Erfindung kommt zu diesem Zweck ein Spezialwerkzeug in einer CNC-gesteuerten Mehrachsenmaschine zum Einsatz, das mindestens einen Schneidzahn mit einer ersten Spanfläche und einer zweiten Spanfläche aufweist.

Zum erfindungsgemässen Anfasen werden dann unter Einsatz dieses Spezialwerkzeugs die folgenden Schritte ausgeführt:
- Antreiben des Spezialwerkzeugs in einer ersten Drehrichtung,
- Ausführen CNC-gesteuerter Relativbewegungen, während sich das Werkzeug in der ersten Drehrichtung dreht, um mit der ersten Spanfläche des Werkzeugs eine erste Kante eines erstens Zahns der Verzahnung anzufasen,
- Ausführen CNC-gesteuerter Relativbewegungen, während sich das Werkzeug (weiter) in der ersten Drehrichtung dreht, um mit der zweiten Spanfläche des Werkzeugs eine zweite Kante des erstens Zahns der Verzahnung anzufasen, wobei
   die CNC-gesteuerten Relativbewegungen während des Anfasens wälzschälartige kontinuierliche Bewegungen sind und ein Achskreuzwinkel der Werkzeugachse mit der Werkstückachse betragsmäßig im Bereich zwischen 10 Grad und 30 Grad vorgegeben wird.

Das Anfasen der ersten Kante(n) erfolgt in einer ersten Maschineneinstellung und das Anfasen der zweiten Kante(n) erfolgt in einer zweiten Maschineneinstellung. D.h. es wird in einem Zwischenschritt die Maschineneinstellung verändert.

Das erfindungsgemässe Verfahren eignet sich besonders für das stirnseitige Anfasen von Verzahnungen in einem wälzschälartigen Prozess, wobei keine Drehrichtungsumkehr erforderlich ist, um rechte und linke Flanken anfasen zu können.

Hier wird ein Verfahren als wälzschälartiger kontinuierlicher Prozess bezeichnet, falls durch die Maschineneinstellung ein Achskreuzwinkel zwischen der Rotationsachse des Spezialwerkzeugs und der Rotationsachse des Werkstücks vorgegeben ist, der ungleich Null ist.

Gemäss Erfindung hat ein solcher wälzschälartiger Prozess stets eine resultierende Relativbewegung zwischen dem Spezialwerkzeug und dem Werkstück, die in einen Drehanteil (rotatorischer Anteil) und einen Schubanteil (translatorischer Anteil) zerlegt werden kann.

Vorzugsweise wird beim erfindungsgemässen Anfasen in allen Ausführungsformen der Gleitanteil ausgenutzt, um die für das Anfasen erforderliche Schnittbewegung auszuführen.

Beim erfindungsgemässen Anfasen wird/werden vorzugsweise bei allen Ausführungsformen folgende Bewegung/en ausgeführt.
i. Nur radiales Einstechen des Spezialwerkzeugs am Werkstück in richtiger Bauteilhöhe und die Kante ist fertig angefast. Dann kann das Spezialwerkzeug wieder aus der Zahnlücke herausgefahren werden.
ii. Oder Einstechen des Spezialwerkzeugs von "oberhalb" der Verzahnung am Werkstück (axiales Heranführen des Spezialwerkzeugs ans Werkstück) und Ausführen einer kleiner axialen Bewegung bis die Kante fertig angefast ist.
iii. Es können gemäß Erfindung auch diese beiden Bewegungsansätze i. und ii. miteinander kombiniert werden.

Bei dem erfindungsgemässen wälzschälartigen Anfasen handelt es sich um einen kontinuierlichen Prozess, bei dem der/die Schneidzahn/Schneidzähne des Spezialwerkzeugs nacheinander z.B. alle rechten Flanken anfast/anfasen, bevor die Maschineneinstellung geändert und dann alle linken Flanken angefast werden.

Das Entgratverfahren der Erfindung wird im Folgenden aber anhand von stirnseitigen Kanten beschrieben.

Das erfindungsgemässe Verfahren kann sowohl im Zusammenhang mit einer Trocken- als auch einer Nassbearbeitung durchgeführt werden.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1A**: zeigt eine schematische Darstellung eines geradverzahnten Schälrads mit zylindrischer Außenkontur im Eingriff mit einem außenverzahnten Werkstück beim Wälzschälen;
- **FIG. 1B**: zeigt eine schematische Darstellung eines schrägverzahnten Schälrads mit konischer Außenkontur im Eingriff mit einem außenverzahnten Werkstück beim Wälzschälen;
- **FIG. 2**: zeigt eine stark schematisierte Darstellung eines ersten Spezialwerkzeugs der Erfindung mit konischer Außenkontur, wobei ein einzelner Schneidzahn gezeigt ist;
- **FIG. 3A**: zeigt eine schematische Perspektivansicht eines Spezialwerkzeugs der Erfindung im Eingriff mit einem innenverzahnten Werkstück beim wälzschälartigen stirnseitigen Anfasen der rechten Flanken des innenverzahnten Werkstücks;
- **FIG. 3B**: zeigt eine schematische Perspektivansicht eines Ausschnitts des innenverzahnten Werkstücks der Fig. 3A, wobei das stirnseitige Anfasen einer rechten Flanke durch einen Pfeil dargestellt ist;
- **FIG. 3C**: zeigt eine schematische Perspektivansicht des Spezialwerkzeugs und des innenverzahnten Werkstücks der Fig. 3A beim wälzschälartigen stirnseitigen Anfasen der linken Flanken des innenverzahnten Werkstücks;
- **FIG. 3D**: zeigt eine schematische Perspektivansicht eines Ausschnitts des innenverzahnten Werkstücks der Fig. 3A, wobei das stirnseitige Anfasen einer linken Flanke durch einen Pfeil dargestellt ist;
- **FIG. 4**: zeigt eine schematische Perspektivansicht eines Ausschnitts eines innenverzahnten Werkstücks nach dem Anfasen der rechten und linken Flanken;
- **FIG. 5**: zeigt eine schematische Seitenansicht des Grundkörpers eines Verzahnungswerkzeugs, das hier mit nur einem beispielhaften Messerstab bestückt ist, wobei vor dem Verzahnungswerkzeug ein Spezialwerkzeug der Erfindung koaxial zum Verzahnungswerkzeug angeordnet ist.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische, periodische Strukturen sind zum Beispiel Zahnräder (wie Stirnräder) mit Innen- oder Außenverzahnung. Es kann sich aber zum Beispiel auch um Bremsscheiben, Kupplungs- oder Getriebeelemente und dergleichen handeln. Insbesondere geht es um die Herstellung von Ritzelwellen, Schnecken, Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

Das Einsatzspektrum des beschriebenen Entgratverfahrens ist groß und erstreckt sich auf die Anwendung bei der Herstellung verschiedenster rotationssymmetrischer periodischer Strukturen.

Hier wird der Begriff "Anfasen" für einen Vorgang verwendet, bei dem Kanten eines Werkstücks 20 angefast und/oder überstehende Grate entgratet werden. Es kann sich um sogenannte stirnseitige Kanten handeln, wie Sie z.B. an der/den Stirnseite/n von Zahnrädern vorkommen.

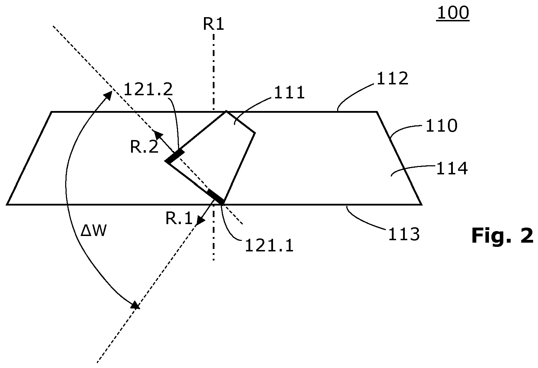

Im Folgenden ist von einem Spezialwerkzeug 100 die Rede, das die Form oder Gestalt eines Schneidrads hat. In Fig. 2 ist ein erstes Beispiel eines solchen Werkzeugs 100 gezeigt. Es handelt sich in diesem Ausführungsbeispiel um ein Vollwerkzeug, bei dem die Schneidzähne 111 Teil des Werkzeugs 100 sind. Das Wälzschälwerkzeug 100 kann mehrere Schneidzähne 111 aufweisen, wobei in dem in Fig. 2 gezeigten Ausführungsbeispiel nur ein Schneidzahn 111 vorgesehen ist.

Der/die Schneidzähne 111 haben bei allen Ausführungsformen entweder eine trapezoide oder eine dreieckige Grundform in einer zur Achse R1 parallelen Schnittebene (vorzugsweise in einer Ebene, die hier als Betrachtungsebene bezeichnet wird) gemäß Fig. 2, wobei diese Schnittebene beide Spanflächen 121.1 und 121.2 schneidet. In Fig. 2 ist ein einzelner Schneidzahn 111 mit trapezoider Grundform gezeigt. In der Praxis kann die wirkliche 3-dimensionale Form des/der Schneidzähne 111 auch komplexer sein, als hier in den Abbildungen gezeigt.

Der Grundkörper 110 des Spezialwerkzeugs 100 hat bei dem in Fig. 2 gezeigten Ausführungsbeispiel die Form einer Kegelstumpfscheibe oder eines kegelstumpfförmigen Tellers. Vorzugsweise haben alle Spezialwerkzeuge 100 der Erfindung die Form einer Kegelstumpfscheibe oder eines kegelstumpfförmigen Tellers. Im Folgenden ist daher von einem schneidradartigen Spezialwerkzeug 100 die Rede.

Das Spezialwerkzeug 100 weist bei allen Ausführungsformen pro Schneidzahn 111 mindestens eine erste Spanfläche 121.1 und eine zweite Spanfläche 121.2 auf, wie in Fig. 2 gezeigt. D.h. gemäss Erfindung sind an jedem Schneidzahn 111 mindestens eine erste Spanfläche 121.1 und eine zweite Spanfläche 121.2 vorgesehen.

Zur Lage und Orientierung der Spanflächen 121.1, 121.2, etc. kann Folgendes ausgesagt werden.
- die beiden Spanflächen 121.1, 121.2 (oder die drei Spanflächen 121.1, 121.2, 121.3, falls der Schneidzahn 111 eine andere Grundform hat) sind jeweils im Bereich unterschiedlicher Seiten des Schneidzahns 111 ausgebildet;
- die Normalenrichtungen R.1, R.2 der beiden Spanflächen 121.1, 121.2 (oder die Normalenrichtungen R.1, R.2, R.3 der drei Spanflächen 121.1, 121.2, 121.3) sind unterschiedlich;
- typischerweise schließen die Normalenrichtungen R.1, R.2 einen Winkel ΔW ein, der in einer Betrachtungsebene grösser ist als 90 Grad. Diese Betrachtungsebene ist eine Ebene, die parallel zur Achse R1 liegt und die durch den Schneidzahnbezugspunkt geht. Dieser Schneidzahnbezugspunkt ist hier als "Mitte" des Schneidzahns festgelegt. Diese Betrachtungsebene wird auch zur Beschreibung der trapezoiden oder eine dreieckigen Grundform herangezogen.
- In Fig. 2 ist zu erkennen, dass der einzelne Schneidzahn 111 gegenüber den Stirnflächen 112, 113 des Grundkörpers 110 verkippt ist. Im gezeigten Ausführungsbeispiel wurde der Schneidzahn 111 um ca. 45 Grad im Uhrzeigersinn verkippt. Die erste Spanfläche 121.1 liegt hier im Bereich der Stirnfläche 113, die auch als "Frontseite" des Spezialwerkzeugs 100 bezeichnet werden kann. Die zweite Spanfläche 121.2 hat eine andere Orientierung, wie in Fig. 2 gezeigt. In fig. 2 sind jeweils die Normalenrichtungen R.1 und R.2 der Spanflächen 121.1 und 121.2 eingezeichnet.

Vorzugsweise sitzen der/die Schneidzähne 111 bei allen Ausführungsformen der Erfindung auf oder im Bereich einer Umfangs- oder Mantelfläche 114 des Grundkörpers 110.

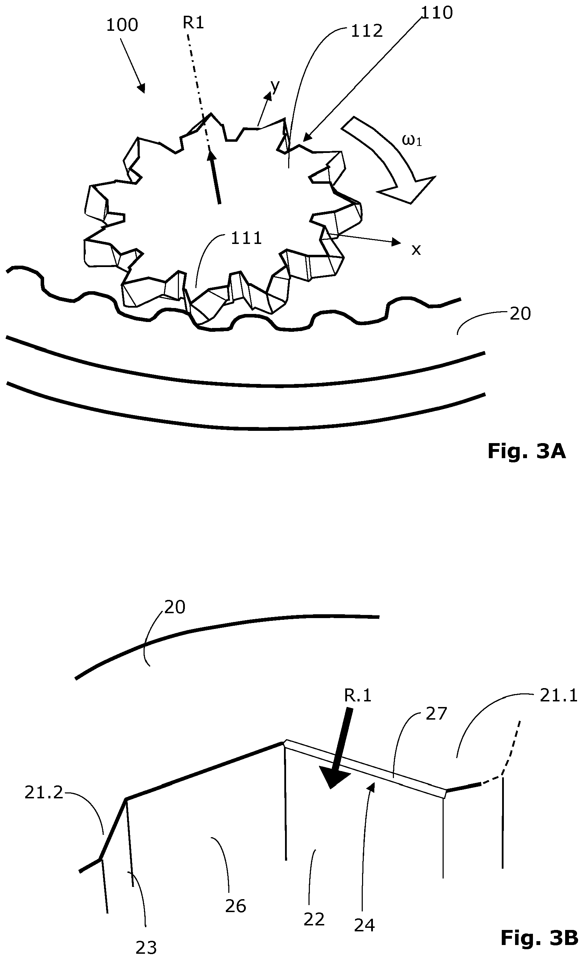

In Fig. 3A ist eine weitere Ausführungsform eines Spezialwerkzeugs 100 der Erfindung beim Anfasen der rechten Flanken eines innenverzahnten Werkstücks 20 gezeigt. Das Spezialwerkzeug 100 wird hier rechtsdrehend (d.h. im Uhrzeigersinn drehend) eingesetzt. ω1 steht für die Rotation um die Achse R1. Das Anfasen der rechten Flanken erfolgt mit einer nach unten gerichteten Schneidrichtung (die Normale R.1 der entsprechenden Spanfläche 121.1 zeigt daher in Fig. 3B schräg nach unten). Die Frontseite 113 des Werkzeugs 100 zeigt in Fig. 3A nach unten. Die Rückseite 112 ist in Fig. 3A sichtbar. Im gezeigten Beispiel sitzen die ersten Spanflächen 121.1 im Bereich der Frontseite 113 und sind daher in Fig. 3A nicht sichtbar. Zusätzlich zur Tatsache, dass beim wälzschälartigen Anfasen der Achskreuzwinkel Σ im gezeigten Beispiel ca. 12 Grad beträgt, kann das Spezialwerkzeug 100 von der zu bearbeitenden Innenverzahnung weggeneigt werden, um einen Freiwinkel zu erzeugen. Das Wegneigen ist optional.

Vorzugsweise liegt der Achskreuzwinkel Σ der Werkzeugachse R1 mit der Werkstückachse R2 bei allen Ausführungsformen betragsmäßig im Bereich zwischen 10 Grad und 30 Grad.

In Fig. 3B ist eine schräge Draufsicht auf eine Stirnseite eines Teils des innenverzahnten Werkstücks 20 der Fig. 3A gezeigt, wobei die Blickrichtung - anders als in Fig. 3A - von schräg hinten auf die Stirnseite des Werkstücks 20 gerichtet ist. Der besseren Übersichtlichkeit halber ist das Spezialwerkzeug 100 nicht gezeigt. Man erkennt in Fig. 3B den Zahnfuss 26, die rechte Flanke 22 und die linke Flanke 23 einer Zahnlücke. In der gezeigten Ansicht rechts von der Zahnlücke sitzt ein erster Zahn 21.1 des Werkstücks 20. Dort wo die rechte Flanke 22 in die Stirnfläche übergeht, befindet sich die Kante 24, die durch Einsatz des erfindungsgemässen Verfahrens angefast wurde. Die entsprechende Fase 27 ist in Fig. 3B schematisch angedeutet. Das Anfasen der rechten Flanke(n) 22 erfolgt in diesem Ausführungsbeispiel, wie bereits erwähnt, mit einer nach unten gerichteten Schneidrichtung. Die Normalenrichtung R.1 der zum Einsatz kommenden Spanfläche 121.1 ist in Fig. 3B durch einen Pfeil veranschaulicht, der von rechts oben nach links unten verläuft. Es ergibt sich hier im konkreten Fall eine Fase 27 an der Kante 24 mit einem Fasenwinkel von ca. 30 Grad.

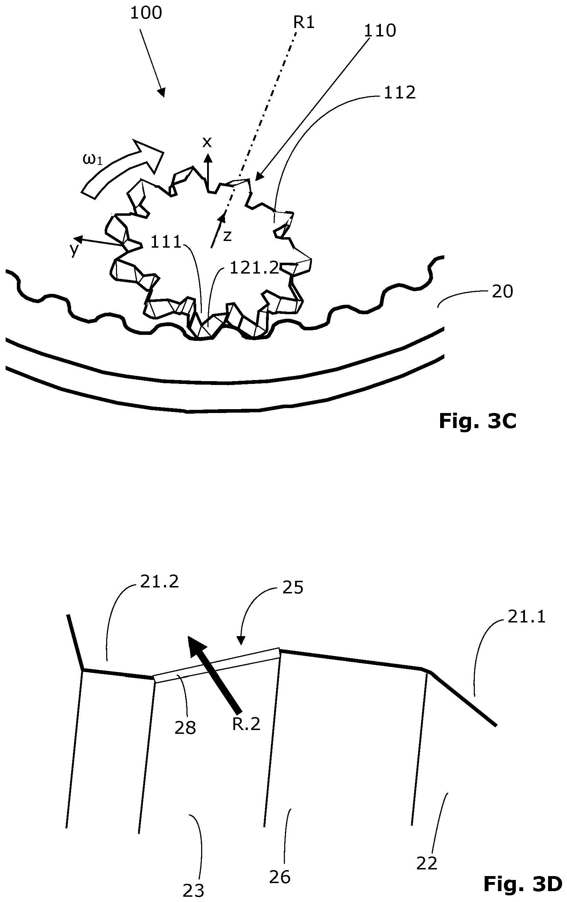

In Fig. 3C ist das Spezialwerkzeug 100 der Fig. 3A beim Anfasen der linken Flanken des innenverzahnten Werkstücks 20 gezeigt. Das Spezialwerkzeug 100 wird hier weiterhin rechtsdrehend (d.h. im Uhrzeigersinn drehend) eingesetzt. Das Anfasen der linken Flanken erfolgt mit einer nach oben gerichteten Schneidrichtung. Die Frontseite 113 des Werkzeugs 100 zeigt in Fig. 3C nach unten. Die Rückseite 112 ist in Fig. 3C sichtbar. Im gezeigten Beispiel sitzen die zweiten Spanflächen 121.2 im Bereich der Rückseite 112 des Werkzeugs 100. Zusätzlich zur Tatsache, dass beim wälzschälartigen Anfasen der Achskreuzwinkel Σ im gezeigten Beispiel jetzt auf ca. -12 Grad eingestellt wurde, kann das Spezialwerkzeug 100 optional von der zu bearbeitenden Innenverzahnung weggeneigt sein.

Es ist zu beachten, dass die Achskreuzwinkel Σ beim Anfasen der rechten und der linken Flanken nicht unbedingt betragsmäßig gleich sein müssen, wie das bei der Ausführungsform der Figuren 3A bis 3D der Fall war. Die aktuellen Maschineneinstellungen beim Anfasen der rechten Kanten und beim Anfasen der linken Kanten werden so vorgegeben, dass sich lokal jeweils optimale Schneidbedingungen ergeben.

In Fig. 3D ist Ansicht einer Zahnlücke des Werkstücks 20 der Fig. 3B gezeigt. Der besseren Übersichtlichkeit halber ist das Spezialwerkzeug 100 nicht gezeigt. Man erkennt in Fig. 3D den Zahnfuss 26, die rechte Flanke 22 und die linke Flanke 23 der Zahnlücke. In der gezeigten Ansicht links von der Zahnlücke sitzt ein zweiter Zahn 21.2 des Werkstücks 20 (der erste Zahn 21.1 ist rechts im Bild zu erkennen). Dort wo die linke Flanke 23 in die Stirnfläche übergeht, befindet sich die Kante 25, die durch Einsatz des erfindungsgemässen Verfahrens angefast wurde. Das Anfasen der linken Flanke(n) 23 erfolgt in diesem Ausführungsbeispiel, wie bereits erwähnt, mit einer nach oben gerichteten Schneidrichtung. Die entsprechende Normalenrichtung R.2 ist in Fig. 3D durch einen Pfeil veranschaulicht und verläuft von rechts unten nach links oben. Es ergibt sich hier im konkreten Fall eine Fase 28 an der Kante 25 mit einem Fasenwinkel von ca. 30 Grad.

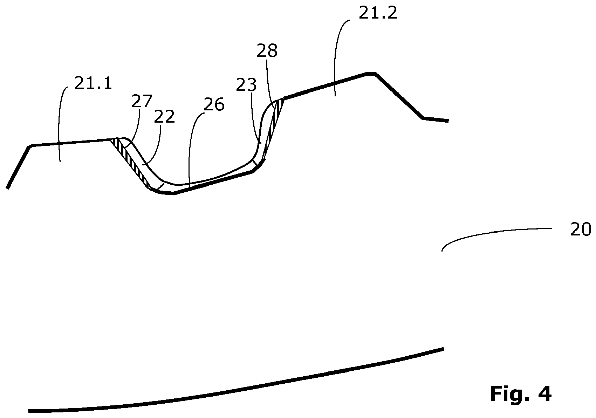

In Fig. 4 ist eine schematische Draufsicht auf einen Abschnitt eines innenverzahnten und angefasten Werkstücks 20 gezeigt. Man erkennt in Fig. 4 zwei benachbarte Zähne 21.1 und 21.2 sowie eine Zahnlücke zwischen diesen beiden Zähnen. Die entsprechende Zahnlücke ist hier durch den Zahnfuss 26 und die Flanken 22 und 23 definiert. Dort wo sich bisher die Kanten 25, 26 befanden, befinden sich nun Fasen 27, 28. Die Fasen 27, 28 sind hier schraffiert gezeigt, Solche Fasen 27, 28 können beispielsweise mit dem erfindungsgemässen Verfahren erzeugt werden.

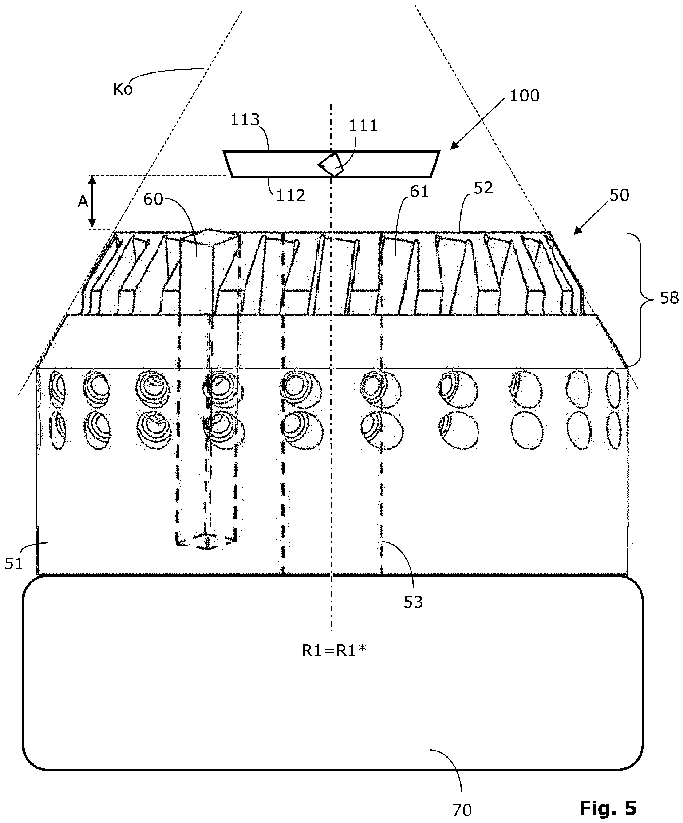

In einer besonders bevorzugten Ausführungsform der Erfindung sitzt das Spezialwerkzeug 100 konzentrisch zur Rotationsachse R1* eines Verzahnungswerkzeugs 50, wie in Fig. 5 anhand eines Beispiels gezeigt.

In Fig. 5 ist die Mantelform des Grundkörpers 51 eines beispielhaften Verzahnungswerkzeugs 50 in einer schematisierten Seitenansicht gezeigt. Der Grundkörper 51 ist hier mit nur einem Messerstab 60 bestückt. Derjenige Teil des Messerstabs 60, der sichtbar ist, weil er aus der werkstückseitigen Stirnfläche 52, respektive aus dem konischen Abschnitt des Endstücks 58 des Grundkörpers 51 heraus ragt, ist mit einer durchgezogenen Linie gezeigt. Der unsichtbare Teil des Messerstabs 60, d.h. derjenige Teil, der im Inneren des Grundkörpers 51 in einer entsprechenden Aufnahmeöffnung 61 sitzt, ist mittels einer gestrichelten Linie gezeigt. Die Aufnahmeöffnung 61 hat im Inneren des Grundkörpers 51 eine Form, die in etwa der Form des nicht sichtbaren Teils des Messerstabs 60 entspricht. Dieses Verzahnungswerkzeug 50 kann zum Beispiel eine zentrale Durchgangsöffnung 53 aufweisen, um das Verzahnungswerkzeug 50 an einer Werkzeugspindel 70 einer CNC-Maschine befestigen zu können. Die Werkzeugspindel 70 ist in Fig. 5 nur rein schematisch gezeigt.

Das Spezialwerkzeug 100 sitzt im Beispiel der Fig. 5 konzentrisch zur Rotationsachse R1* des Verzahnungswerkzeugs 50, d.h. es gilt R1 = R1*. Das Spezialwerkzeug 100 befindet sich hier oberhalb der werkstückseitigen Stirnfläche 52 des Verzahnungswerkzeugs 50 und die Rückfläche 112 des Spezialwerkzeugs 100 weist in Richtung der werkstückseitigen Stirnfläche 52.

Der Grundkörper 110 des Spezialwerkzeugs 100 hat vorzugsweise eine Konizität, die der Konizität des Endstücks 58 des Grundkörpers 51 des Verzahnungswerkzeugs 50 entgegengesetzt ist, wie in Fig. 5 gezeigt.

Um in einer solchen Huckepack-Konstellation eine Kollision des Spezialwerkzeugs 100 mit dem Werkstück 20 zu vermeiden, sind die Form, die Grösse und die Position des Spezialwerkzeugs 100 (Abstand A zur Stirnfläche 52) vorzugsweise bei allen Ausführungsformen so gewählt, dass dieses innerhalb eines virtuellen Konus Ko liegt, der in Fig. 5 durch strichlierte Linien angedeutet ist. Bei dem Beispiel nach Fig. 5 ist diese Forderung eindeutig erfüllt. Der virtuelle Konus Ko wird hier durch die Kegelform des Grundkörpers 51 definiert, wobei die Messerstäbe 60 mit in diesem virtuellen Konus Ko eingehüllt sind.

Vorzugsweise ist die Kegelform des Grundkörpers 51 bei allen Ausführungsformen so definiert, das einerseits die Messerstäbe 60 möglichst weit umschlossen sind (tief in den Aufnahmeöffnungen 61 sitzen) und das andererseits keine Kollision mit dem zu bearbeitenden Werkstück 20 auftritt.

Durch eine Huckepack-Konstellation, wie in Fig. 5 gezeigt, können die Prozess- und Nebenzeiten deutlich verkürzt werden, was vor allem bei einer Serienproduktion von Bedeutung ist.

Eine solche Huckepack-Konstellation kann vor allem zusammen mit einem Messerkopf zum Einsatz kommen, wie er in dem deutschen Gebrauchsmuster DE202011050054U1 beschrieben ist.

## Patentansprüche

1. Verfahren zum stirnseitigen Anfasen einer Verzahnung (21.1, 21.2) eines Werkstücks (20) in einer CNC-gesteuerten Mehrachsenmaschine, **gekennzeichnet durch** die folgenden Schritte:
- Einsetzen eines Werkzeugs (100) in der Mehrachsenmaschine, wobei das Werkzeug (100) mindestens einen Schneidzahn (111) mit einer ersten Spanfläche (121.1) und einer zweiten Spanfläche (121.2) aufweist,
- Antreiben des Werkzeugs (100) in einer ersten Drehrichtung,
- Ausführen erster CNC-gesteuerter Relativbewegungen, während sich das Werkzeug (100) in der ersten Drehrichtung dreht, um mit der ersten Spanfläche (121.1) des Werkzeugs (100) eine erste stirnseitige Kante (24) eines erstens Zahns (21.1) der Verzahnung anzufasen,
- Ausführen zweiter CNC-gesteuerter Relativbewegungen, während sich das Werkzeug (100) in der ersten Drehrichtung dreht, um mit der zweiten Spanfläche (121.2) des Werkzeugs (100) eine zweite stirnseitige Kante (25) des erstens Zahns (21.1) oder eines anderen Zahnes (21.2) der Verzahnung anzufasen,
wobei die CNC-gesteuerten Relativbewegungen während des Anfasens wälzschälartige kontinuierliche Bewegungen sind und ein Achskreuzwinkel (Σ) der Werkzeugachse (R1) mit der Werkstückachse (R2) betragsmäßig im Bereich zwischen 10 Grad und 30 Grad vorgegeben wird.

2. Verfahren nach Anspruch 1, **dadurch gekennzeichnet, dass** während des Anfasens ein radiales Einstechen des Werkzeugs (100) am Werkstück (20) ausgeführt wird und, dass nach dem Anfasen das Werkzeug (100) aus dem Werkstück (20) herausgefahren wird.

3. Verfahren nach Anspruch 1 oder 2, **dadurch gekennzeichnet, dass** während des Anfasens ein Einstechen des Werkzeugs (100) am Werkstück (20) zusammen mit einer axialen Bewegung ausgeführt werden.

4. Verfahren nach Anspruch 1, 2 oder 3, **dadurch gekennzeichnet, dass** die Mehrachsenmaschine beim Ausführen der ersten CNC-gesteuerten Relativbewegungen eine erste Maschineneinstellung und beim Ausführen der zweiten CNC-gesteuerten Relativbewegungen eine zweite Maschineneinstellung vorgibt, wobei sich die erste Maschineneinstellung von der zweiten Maschineneinstellung unterscheidet.

5. Verfahren nach Anspruch 4, **dadurch gekennzeichnet, dass** sich die erste Maschineneinstellung von der zweiten Maschineneinstellung durch den Achskreuzwinkel (Σ) unterscheidet.

6. Verfahren nach einem der Ansprüche 1 bis 5, **dadurch gekennzeichnet, dass** es sich bei der ersten stirnseitigen Kante (24) um eine Kante einer rechten Flanke (23) und bei der zweiten stirnseitigen Kante (25) um eine Kante einer linken Flanke (23), oder umgekehrt, handelt.

7. Verfahren nach einem der Ansprüche 1 bis 5, **dadurch gekennzeichnet, dass** das Werkzeug (100) schneidradartig ausgebildet ist und an seiner Umfangsfläche bzw. Mantelfläche (114) mindestens einen Schneidzahn (111) aufweist, wobei dieser Schneidzahn (111) eine erste Spanfläche (121.1) und eine zweite Spanfläche (121.2) aufweist.

8. Verfahren nach Anspruch 1 oder 7, **dadurch gekennzeichnet, dass** jeder der Schneidzähne (111) eine trapezoide oder eine dreieckige Grundform aufweist.

9. Verfahren nach Anspruch 1 oder 8, **dadurch gekennzeichnet, dass** das Werkzeug (100) zusammen mit einem Verzahnungswerkzeug (50) eine Huckepackkonstellation bildet, wobei nach Verfahrensschritten, die dem Verzahnen des Werkstücks (20) dienen, die Verfahrensschritte des Anspruchs 1 folgen.

10. Vorrichtung zum stirnseitigen Anfasen einer Verzahnung (21.1, 21.2) eines Werkstücks (20), wobei die Vorrichtung zum Einspannen an einer Werkzeugspindel (70) einer CNC-gesteuerten Mehrachsenmaschine ausgelegt ist, wobei die Vorrichtung umfasst:
- ein Verzahnungswerkzeug (50),
- ein Spezialwerkzeug (100), das koaxial zu dem Verzahnungswerkzeug (50) angeordnet ist, wobei das Spezialwerkzeug (100) in der koaxialen Anordnung aus werkstückseitiger Sicht vor dem Verzahnungswerkzeug (50) sitzt,
und wobei das Werkzeug (100) schneidradartig ausgebildet ist und an seiner Umfangsfläche bzw. Mantelfläche (114) mindestens einen Schneidzahn (111) aufweist, wobei dieser Schneidzahn (111) eine erste Spanfläche (121.1) aufweist, **dadurch gekennzeichnet, dass**
- dieser Schneidzahn (111) eine zweite Spanfläche (121.2) aufweist, und,
- dass die CNC-gesteuerte Mehrachsenmaschine dazu ausgelegt ist CNC-gesteuerte Relativbewegungen während des Anfasens in Form von wälzschälartigen kontinuierlichen Bewegungen auszuführen und einen Achskreuzwinkel (Σ) der Werkzeugachse (R1) mit der Werkstückachse (R2) betragsmäßig im Bereich zwischen 10 Grad und 30 Grad vorzugeben.

11. Vorrichtung nach Anspruch 10, **dadurch gekennzeichnet, dass** das Verzahnungswerkzeug (50) einen Grundkörper (51) aufweist, der in einem werkstücknahen Bereich ein konisch geformtes Endstück (58) umfasst, wobei das Spezialwerkzeug (100) mit einem lichten Abstand (A) vor dem konisch geformten Endstück (58) des Verzahnungswerkzeugs (50) sitzt.

12. Vorrichtung nach Anspruch 11, **dadurch gekennzeichnet, dass** das Spezialwerkzeug (100) konisch ausgebildet ist, wobei die entsprechende Konizität des Spezialwerkzeug (100) entgegengesetzt verläuft zu der Konizität des konisch geformten Endstücks (58).

## Claims

1. A method for the face-side chamfering of gear teeth (21.1, 21.2) of a workpiece (20) in a CNC-controlled multiaxis machine, **characterized by** the following steps:
- employing a tool (100) in the multiaxis machine, wherein the tool (100) has at least one cutting tooth (111) having a first rake face (121.1) and a second rake face (121.2),
- driving the tool (100) in a first rotational direction,
- executing first CNC-controlled relative movements while the tool (100) rotates in the first rotational direction to chamfer a first face-side edge (24) of a first tooth (21.1) of the gear teeth using the first rake face (121.1) of the tool (100),
- executing second CNC-controlled relative movements while the tool (100) rotates in the first rotational direction, to chamfer a second face-side edge (25) of the first tooth (21.1) or another tooth (21.2) of the gear teeth using the second rake face (121.2) of the tool (100),
wherein the CNC-controlled relative movements during the chamfering are continuous movements similar to power skiving, and an axis intersection angle (Σ) of the tool axis (R1) with the workpiece axis (R2) is predefined in absolute value in the range between 10° and 30°.

2. The method according to claim 1, **characterized in that**, during the chamfering, radial plunging of the tool (100) is executed on the workpiece (20), and, after the chamfering, the tool (100) is moved out of the workpiece (20).

3. The method according to claim 1 or 2, **characterized in that**, during the chamfering, plunging of the tool (100) is executed on the workpiece (20) together with an axial movement.

4. The method according to claim 1, 2 or 3, **characterized in that** the multiaxis machine predefines a first machine setting during the execution of the first CNC-controlled relative movements and predefines a second machine setting during the execution of the second CNC-controlled relative movements, wherein the first machine setting differs from the second machine setting.

5. The method according to claim 4, **characterized in that** the first machine setting differs from the second machine setting by way of the axis intersection angle (Σ) .

6. The method according to any one of claims 1 to 5, **characterized in that** the first face-side edge (24) is an edge of a right flank (23) and the second face-side edge (25) is an edge of a left flank (23), or vice versa.

7. The method according to any one of claims 1 to 5, **characterized in that** the tool (100) is implemented like a skiving wheel, and has at least one cutting tooth (111) on its circumferential surface or lateral surface (114), wherein this cutting tooth (111) has a first rake face (121.1) and a second rake face (121.2).

8. The method according to claim 1 or 7, **characterized in that** each of the cutting teeth (111) has a trapezoidal or a triangular basic shape.

9. The method according to claim 1 or 8, **characterized in that** the tool (100) forms a piggyback configuration together with a gear cutting tool (50), wherein the method steps of claim 1 follow after method steps which are used for the gear cutting of the workpiece (20).

10. Apparatus for the face-side chamfering of gear teeth (21.1, 21.2) of a workpiece (20), wherein the device is designed for chucking on a tool spindle (70) of a CNC-controlled multiaxis machine, **characterized in that** the device comprises:
- a gear cutting tool (50),
- a special tool (100), which is arranged coaxially to the gear cutting tool (50), wherein the special tool (100) is seated in front of the gear cutting tool (50) from the workpiece-side view point in the coaxial arrangement,
and wherein the tool (100) is implemented like a cutting wheel and has at least one cutting tooth (111) on its circumferential surface or lateral surface (114), wherein this cutting tooth (111) has a first rake face (121.1) and a second rake face (121.2), **characterized in that**
this cutting tooth (111) comprises a second rake face (121.2), and
that the CNC-controlled multiaxis machine is designed to carry out CNC-controlled relative movements which are continuous movements similar to power skiving, and an axis intersection angle (Σ) of the tool axis (R1) with the workpiece axis (R2) is predefined in absolute value in the range between 10° and 30°.

11. The apparatus according to claim 10, **characterized in that** the gear cutting tool (50) has a main body (51), which comprises a conical end part (58) in a workpiece-proximal region, wherein the special tool (100) is seated with a clearance (A) in front of the conical end part (58) of the gear cutting tool (50).

12. The apparatus according to claim 11, **characterized in that** the special tool (100) is implemented as conical, wherein the corresponding conicity of the special tool (100) extends opposite to the conicity of the conical end part (58).

## Revendications

1. Procédé pour chanfreiner sur le côté frontal une denture (21.1, 21.2) d'une pièce à usiner (20) dans une machine multi-axes à commande CNC, **caractérisé par** les étapes suivantes consistant à :
- insérer un outil (100) dans la machine multi-axes, l'outil (100) présentant au moins une dent coupante (111) avec une première face d'attaque (121.1) et une deuxième face d'attaque (121.2),
- entraîner l'outil (100) dans un premier sens de rotation,
- réaliser des premiers mouvements relatifs commandés par CNC pendant que l'outil (100) tourne dans le premier sens de rotation pour chanfreiner, avec la première face d'attaque (121.1) de l'outil (100), un premier bord côté frontal (24) d'une première dent (21.1) de la denture,
- réaliser des deuxièmes mouvements relatifs commandés par CNC pendant que l'outil (100) tourne dans le premier sens de rotation pour chanfreiner, avec la deuxième face d'attaque (121.2) de l'outil (100), un deuxième bord côté frontal (25) de la première dent (21.1) ou d'une autre dent (21.2) de la denture,
dans lequel les mouvements relatifs commandés par CNC, pendant le chanfreinage, sont des mouvements continus de type taillage par développante, et dans lequel il est défini un angle de croisement d'axe (Σ) de l'axe d'outil (R1) avec l'axe de pièce (R2) avec une amplitude entre 10 degrés et 30 degrés.

2. Procédé selon la revendication 1, **caractérisé en ce que**, pendant le chanfreinage, on réalise une plongée radiale de l'outil (100) au niveau de la pièce à usiner (20), et **en ce qu'**après le chanfreinage, l'outil (100) est sorti de la pièce à usiner (20).

3. Procédé selon la revendication 1 ou 2, **caractérisé en ce que**, pendant le chanfreinage, on réalise une plongée de l'outil (100) au niveau de la pièce à usiner (20) en réalisant en même temps un mouvement axial.

4. Procédé selon la revendication 1, 2 ou 3, **caractérisé en ce que** la machine multi-axes, lors de la réalisation des premiers mouvements relatifs commandés par CNC, définit un premier réglage de machine et, lors de la réalisation des deuxièmes mouvements relatifs commandés par CNC, un deuxième réglage de machine, le premier réglage de machine étant différent du deuxième réglage de machine.

5. Procédé selon la revendication 4, **caractérisé en ce que** le premier réglage de machine diffère du deuxième réglage de machine par l'angle de croisement d'axe (Σ).

6. Procédé selon l'une des revendications 1 à 5, **caractérisé en ce que** le premier bord côté frontal (24) est un bord d'un flanc droit (23) et le deuxième bord côté frontal (25) est un bord d'un flanc gauche (23), ou inversement.

7. Procédé selon l'une des revendications 1 à 5, **caractérisé en ce que** l'outil (100) est réalisé sous la forme d'une molette de coupe et présente sur sa surface circonférentielle ou surface d'enveloppe (114) au moins une dent coupante (111), cette dent coupante (111) présentant une première face d'attaque (121.1) et une deuxième face d'attaque (121.2).

8. Procédé selon la revendication 1 ou 7, **caractérisé en ce que** chacune des dents coupantes (111) présente une forme de base trapézoïdale ou triangulaire.

9. **Procédé** selon la revendication 1 ou 8, **caractérisé en ce que** l'outil (100) forme avec un outil à tailler les engrenages (50) une configuration de ferroutage, dans lequel, après les étapes de procédé qui servent à tailler les engrenages de la pièce à usiner (20), suivent les étapes de procédé de la revendication 1.

10. Dispositif pour chanfreiner côté frontal une denture (21.1, 21.2) d'une pièce à usiner (20), le dispositif étant conçu pour fixer sur une broche d'outil (70) d'une machine multi-axes à commande CNC, le dispositif comprenant :
- un outil à tailler les engrenages (50),
- un outil spécial (100) qui est agencé de façon coaxiale par rapport à l'outil à tailler les engrenages (50), l'outil spécial (100) se trouvant dans l'agencement coaxial vu du côté pièce à usiner devant l'outil à tailler les engrenages (50),
et dans lequel l'outil (100) est réalisé sous la forme d'une molette de coupe et présente sur sa surface circonférentielle ou surface d'enveloppe (114) au moins une dent coupante (111), cette dent coupante (111) présentant une première face d'attaque (121.1), **caractérisé en ce que**
- cette dent coupante (111) présente une deuxième face d'attaque (121.2), et
- **en ce que** la machine multi-axes à commande CNC est conçue pour réaliser des mouvements relatifs commandés par CNC pendant le chanfreinage sous la forme de mouvements continus de type taillage par développante, et pour définir un angle de croisement d'axe (Σ) de l'axe d'outil (R1) avec l'axe de pièce (R2) avec une amplitude entre 10 degrés et 30 degrés.

11. Dispositif selon la revendication 10, **caractérisé en ce que** l'outil à tailler les engrenages (50) présente un corps de base (51) qui comprend dans une zone proche de la pièce un embout de forme conique (58), l'outil spécial (100) se trouvant à une distance libre (A) devant l'embout de forme conique (58) de l'outil à tailler les engrenages (50).

12. Dispositif selon la revendication 11, **caractérisé en ce que** l'outil spécial (100) est réalisé conique, la conicité respective de l'outil spécial (100) étant orientée de façon opposée à la conicité de l'embout de forme conique (58).
